# EUROPEAN PATENT APPLICATION

(11) **EP 2 740 967 A1**
(43) Date of publication of application: **11.06.2014**
(21) Application number: 12195888.8
(22) Date of filing: 06.12.2012
(51) Int. Cl.: F16G 13/20

(54) **Operating device**

(71) Applicant: Serapid SAS, 76660 Londinieres (FR)
(72) Inventor: Lounis, Said, Bloomfield Hills, MI Michigan 48302 (US)
(74) Representative: Babeluk, Michael

(57) **Abstract**

The invention relates to an operating device having a housing, a thrust chain (1) consisting of several chain elements having at least two parallel side plates connected by connection pins (2), at least one sprocket (3) acting upon the chain elements, and at least one guiding element (7a, 7b) guiding the chain (1), wherein the chain (1) has a first section (1a) and a second section (1b) being essentially perpendicular to the first section (1a) and a curve section (1c) between them, wherein said side plates have an inner flange (9) and an outer flange (10), and wherein the sprocket (3) meshes with the chain (1) in the first section (1a). Compact dimensions can be obtained in that two guiding elements (7a, 7b) are arranged in the housing in a distance from each other acting upon the inner flange (9) of side plates of the chain (1) in the first section (1a) and that a straining element (8) is arranged between the guiding elements (7a, 7b) on the opposite side of the chain (1).

## Description

The present invention relates to an operating device comprising a thrust chain according to the preamble of claim 1. Such devices are arranged in a way having a housing, a thrust chain consisting of several chain elements having at least two parallel side plates connected by connection pins, at least one sprocket acting upon the chain elements, and at least one guiding element guiding the chain, wherein the chain has a first vertical section and a second horizontal section and a curve section between them, wherein said side plates have an inner flange and an outer flange, and wherein the sprocket meshes with the chain in the first vertical section.

Such operating device is well suited to lift platforms or open windows or the like. It can transmit thrust forces without needing much space for a lifting mechanism. The terms "vertical" and "horizontal" in connection with the sections of the chain are related to a usual use of such operating device, in which the column is more or less vertical. However, there may be other situations in which the orientation is different.

One common type of such devices comprise a sprocket meshing with the pins of the chain elements in the bending section of the chain. Such a solution is shown in DE 10 2006 059 711 A. The advantage of this construction is that the chain is guided in the bending section by the sprocket. However, the disadvantage of such type of operating device is that always fluctuations in the upward movement occur due to the geometry of sprocket and pins.

US 6,224,037 A assigned to the applicant, discloses a lifting device as explained above in which a sprocket acts upon a straight part of the chain so that the fluctuations can be reduced substantially. In the first vertical section the chain is guided by guide rails acting upon rollers attached to the pins of the chain to prevent buckling. Since the guide rails have to have a sufficient length for guiding the chain the housing has to have a minimum size which cannot be reduced. A variant of such chain is shown in DE 10 205 052 520 A in which the sprocket is acting upon a toothed flange of the chain elements.

It is an object of the invention to overcome the above problems and to provide for an operating device having a small housing. Further the operation should be smooth and free from fluctuations.

These objects can be achieved by an operating device as defined in claim 1. it is an important improvement to provide for two guiding elements acting upon the inner flange of side plates of the chain. So it is possible to create a triangle of forces with two forces applied by the two guiding elements and a third force in between provided by a strain element urging the chain into a stretched configuration. An important advantage of this configuration is that the length in axial direction needed to guide the chain is smaller.

Usually the first section is vertical in ordinary use and the second section is horizontal in ordinary use. This is the case when the invention is a lifting device for lifting a table, a window or the like. However the invention can be applied to other applications in which the orientation of the sections will differ. So a lifting device for roof windows has sections which are aslant according to the angle in which the window is inclined. Also it is possible to use the device of the invention for an actuation in horizontal direction, so that the first section will be horizontal. However, it is essential, that first and second sections are perpendicular or at least approximately perpendicular one to the other.

It is preferred that the guiding elements are rollers. In this case friction can be minimized. Alternative solutions are guiding blocks or a belt. In a similar way the straining element is preferably a roller.

A further preferred variant of the invention provides for guiding elements that are arranged in a distance slightly longer than the length of a chain element in axial direction. Such distance could be between 180% and 280%, preferably between 200% and 230% of the length of a chain element in axial direction. So a very small casing can be foreseen.

Now the present invention will be explained by some preferred embodiments. The drawings show:

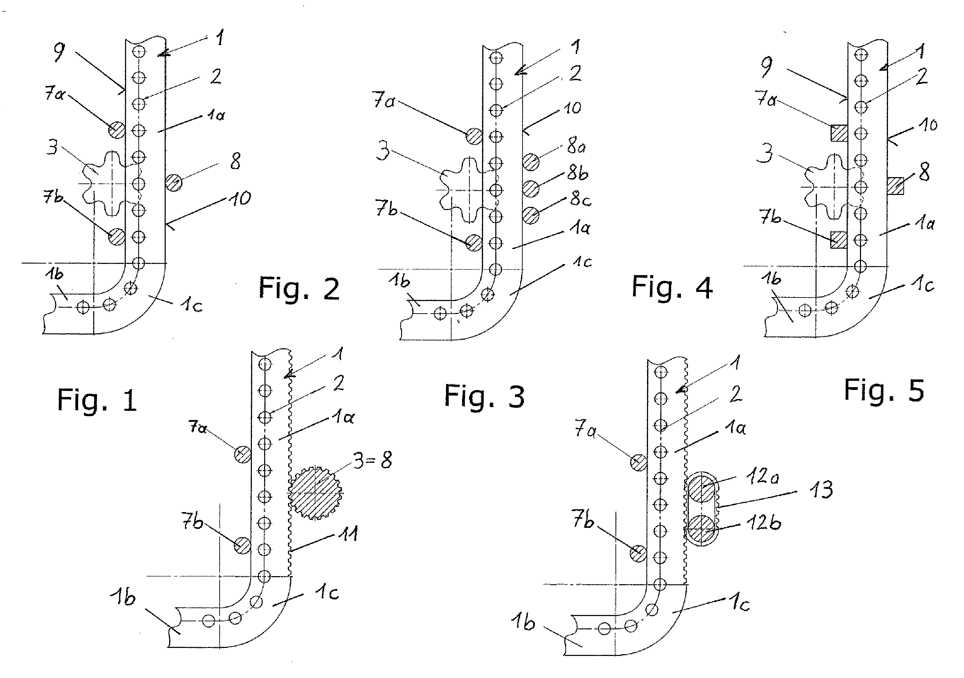

Fig. 1 to Fig. 5 five different embodiments of the invention schematically in a side view.

The embodiment of Fig. 1 comprises a thrust chain 1 having a first vertical section 1a and a second horizontal section 1b. In a curve section 1c the drive chain is deflected from first vertical section 1a to second horizontal section 1b. first vertical section 1a and a second horizontal section 1b first vertical section 1a and a second horizontal section 1b. The thrust chain 1 is driven by a sprocket 3 meshing with pins 2 of the chain elements.

Two guiding elements 7a, 7b are pressing upon an inner flange 9 of side plates of the chain 1, a first guiding element 7a above the sprocket 3, second guiding element 7a below the sprocket 3. In the embodiment of Fig. 1 guiding elements 7a, 7b are rollers. Opposite to sprocket 3 there is a straining element 8 provided, which is also a roller pressing upon an outer flange 10 of chain 1. The triangle consisting of guiding elements 7a, 7b and straining element 8 urges the chain 1 in a straight configuration so that chain 1 will be able to transmit thrust forces.

Fig. 2 shows an embodiment in which sprocket 3 is located on the outer side of chain 1 and acts upon a toothed section 11 of the outer flange of the side plates. So sprocket 3 is at the same time straining element 8 since it is located opposite to guiding elements 7a, 7b and in a height between them.

The embodiment of Fig. 3 differs from that of Fig. 1 in that three straining elements 8a, 8b, 8c are provided instead of one. All straining elements 8a, 8b, 8c are located between guiding elements 7a, 7b.

Fig. 4 shows a variation of the solution of Fig. 2 in which sprocket 3 is configured as an assembly consisting of two wheels 12a, 12b connected by a toothed belt 13.

The embodiment of Fig. 5 is similar to that of Fig. 1, but guiding elements 7a, 7b and straining element 8 are guiding blocks instead of rollers.

## Claims

1. An operating device having a housing, a thrust chain (1) consisting of several chain elements having at least two parallel side plates connected by connection pins (2), at least one sprocket (3) acting upon the chain elements, and at least one guiding element (7a, 7b) guiding the chain (1), wherein the chain (1) has a first section (1a) and a second section (1b) being essentially perpendicular to the first section (1a) and a curve section (1c) between them, wherein said side plates have an inner flange (9) and an outer flange (10), and wherein the sprocket (3) meshes with the chain (1) in the first section (1a), **charactericed in that** two guiding elements (7a, 7b) are arranged in the housing in a distance from each other acting upon the inner flange (9) of side plates of the chain (1) in the first section (1a) and that a straining element (8) is arranged between the guiding elements (7a, 7b) on the opposite side of the chain (1).

2. The operating device of claim 1, **charactericed in that** the first section (1a) is vertical in ordinary use and the second section (1b) is horizontal in ordinary use.

3. The operating device of one of claims 1 or 2, **charactericed in that** the guiding elements (7a, 7b) are rollers.

4. The operating device of one of claims 1 to 3, **charactericed in that** the guiding elements (7a, 7b) are arranged in a distance sightly longer than the length of a chain element in axial direction.

5. The operating device of one of claims 1 to 4, **charactericed in that** the guiding elements (7a, 7b) are arranged on an inner side of the chain (1) in vicinity of the curve section (1c).

6. The operating device of one of claims 1 to 5, **charactericed in that** the straining element (8) is a roller.

7. The operating device of one of claims 1 to 6, **charactericed in that** the sprocket (3) meshes with a toothed flange (11) of the side plates, preferably with the inner flange (9).

8. The operating device of claim 7, **charactericed in that** the pitch of the sprocket (3) is smaller than the length of a chain element in axial direction.
